# EUROPEAN PATENT APPLICATION

(11) **EP 2 684 672 A2**
(43) Date of publication of application: **15.01.2014**
(21) Application number: 12754746.1
(22) Date of filing: 29.02.2012
(51) Int. Cl.: B29C 47/06, D01F 8/00

(54) **EXTRUSION LINE FOR PRODUCING A FLAT FIBRE MADE FROM SYNTHETIC RAW MATERIAL**

(30) Priority: 09.03.2011 RU 2011108913
(71) Applicant: Dokukin, Aleksey Nikolaevitch, Rostov-na-Donu 344034 (RU)
(72) Inventor: Dokukin, Aleksey Nikolaevitch, Rostov-na-Donu 344034 (RU)
(74) Representative: Benatov, Emil Gabriel
(86) International application number: PCT/RU2012/000143
(87) International publication number: WO 2012/121623

(57) **Abstract**

The invention relates to polymer processing equipment and, in particular, to equipment for producing a flat fiber made from synthetic raw material and having predetermined characteristics by means of polymer extrusion. The flat fiber made from synthetic raw material and produced using the aforesaid equipment can be used for different purposes in many branches of industry. It can be used, for example, in the weaving industry and the food industry and as a packaging material, and can compare favorably with known fibers as a result of its high durability and resistance to the effects of petrol and moisture, as well as being reusable. Furthermore, the flat fiber made from synthetic raw material can be used in radio electronics, the instrumentation industry and other branches of industry.; The objective set by the designer of this novel extrusion line for producing a flat fiber made from synthetic raw material was to produce an extrusion line for producing a flat fiber made from synthetic raw material which would make it possible to reduce the cost of manufacturing said flat fiber by using cheap or recycled material without drastically reducing the durability of the fiber or other properties necessary to specific types of fibers, thus making it possible to use the fibers produced with the aid of the novel extrusion line in the manufacture of products for different purposes. The technical result achieved in the process of solving the above problem is the possibility of forming layers with predetermined properties in a flat fiber made from synthetic raw material and produced using the aforesaid extrusion line and cheaper or recycled material.; The essence of the invention is that in addition to comprising a slot die for forming a film, a device for cooling said film, devices for cutting the film into strips, stretching said strips and shrinking and winding the resultant fibers on cores, and at least two extruders for shaping melts with different predetermined properties, the extrusion line for producing a flat fiber made from synthetic raw material comprises a device for distributing the melts across at least three layers of a multilayered film. Further, the cooling device is in the form of a water-filled bath or chill rollers, downstream of which the line is provided with appliances for removing water from the film in the form of rollers with an elastic material about the periphery thereof, followed immediately by slotted pipes for the removal of the remaining moisture.

## Description

The invention relates to equipment for polymers processing, particularly to equipment for processing polymers through extrusion of flat yarn from synthetic raw material with predetermined characteristics. The flat yarn from synthetic raw materials obtained on this equipment can be applied in many industries for various purposes. For example, in weaving industry, food industry, as packaging material, and it may have advantages over known yarns. It is more durable, resistant to petrol and moisture, and provides the possibility to reuse it. In addition, the flat yam from synthetic raw materials can be used in radio electronics, instrument-making, and other industries.

Various extrusion lines for flat fiber manufacturing from synthetic material are known. For example, the extrusion line for flat fiber manufacturing from synthetic raw materials is known (see http://www.ligatek.ru/extruders/jc-fy-s.htm). The well-known extrusion line described on this site includes flat-die and continuous filtration system that make possible producing flat fiber. This line produces a tape of uniform thickness across the width of the tape. The fiber after fibrillation is used to make twines, ropes, cable fillers, basis for carpet backing, and artificial green grass. Bath with hot water, which is a part of the line, is fully insulated so as to reduce heat loss and energy consumption. Furnace with hot air is fully insulated, and equipped with two zones of automatic temperature control and air duct. It works on the principle of convection, which provides a constant temperature and reliable distribution of heat. Annealing furnace with hot air reduces internal fiber tension during the process, which increases quality of the fiber. The line includes extrusion unit. Screw conveyor of extrusion unit provides necessary quality of melting, mixing and extrusion. Automatic temperature control reduces power consumption and maintains a constant level of temperature with low fluctuations (+/-1.0°C). Cylinder of extrusion unit is fully insulated and equipped with a cooling fan. A geared pump is designed for sequential extrusion of molten polymeric material. Pressure check shall be made before and after pump operation. To improve the extrusion consistency and quality of yam, pressure up to a geared pump shall be controlled. Quench water bath is designed for smoothing water flow, maintaining constant water temperature, and eliminating agitation on the water surface. Bath can be moved in the horizontal and vertical directions. The line also includes yam-drawing device. Extrusion method of synthetic flat yarns manufacturing, which is implemented using the line advertised on this site, allows obtaining single-layer flat yarns for further applications, such as weaving production. But such a method for extruded synthetic flat yarns manufacturing has some disadvantages. The main disadvantages of this extrusion line for flat yarns manufacturing from synthetic raw materials, as an analogue, is high cost of manufactured flat yam from synthetic raw material, as well as its reduced strength properties.

It is also known the extrusion line for flat yam manufacturing from synthetic raw materials (see http://articles.pakkermash.ru/show_art.php?art=179). Mentioned line advertised on this site includes an extruder, which ensures optimum melt homogenization and is connected with flat-die. The flat-die provides minimal melt thickness deviations and optimum weight distribution across its width. Other design features of the extruder are the ability to feed raw materials through the sleeve with grooves, as well as protection from cold start. The extruder has microprocessor-operated controllers, indicators of melt temperature and back pressure, and, if required, pneumatically controlled movement of the extruder along the rails. The automatic device instead of manual one is used to change the filter when changing the melt filter before the die is necessary, in order to minimize the stops of line, because of poor quality of raw materials, including the recycled raw applications, improper regulation of the melt characteristics, after replacing the screw, or change-over to a different type of raw material. Grid movement will be controlled by timer, and the speed, by the operator. By manual or automatic rotation of the wheel the worked-out filter will be replaced straight by another one during line operation. In cooling system through a water bath, suction device provides an output of entirely dry tape even at high speeds. In rotating device for longitudinal cutting the flat tape extruded from the die and cooled is cut into strips. Further, through the pinch rollers and automatic temperature controllers the strips are fed to the system of air orientation, or the dual system of non-contact air heating and stretching. Thereafter the strips are fed to the combined stretching and shrinking unit, which drives are independent. On the combined unit shrinkage is prevented and tension of flat yarns coming to winding unit is relieved. Winding unit has three pairs of winding rollers of hot, normal and cold temperatures, operating at variable speed. For production of conventional flat yarns, a combination of hot, neutral and cold rollers is offered. Water-cooled rollers provide a constant temperature of flat yarns entering the winding unit. For production of fibrillated flat yarns, the line is equipped with fibrillator, which is located between the orientation air oven and combined stretching and shrinking unit. Fibrillator needle roller has an independent drive, and needles are performed with possibility of their adjusting in accordance with the desired structure of fibrillation. The modular design of the device allows simultaneous making both fibrillated and non-fibrillated tapes. Winding unit provides producing of rolls with wound flat yarns of required quality and colour, and in automatic technology, it provides automated change of wound rolls by empty ones. Extrusion method of synthetic flat yam manufacturing, which is implemented using the line advertised on this site, allows obtaining single-layer flat yarns for further applications, such as weaving production. However, such extrusion method for synthetic flat yarns production has some disadvantages. The main disadvantages of the known extrusion line for flat yarns production form synthetic raw materials, as an analogue, is high cost of flat synthetic yam produced by this line, and reduced strength properties.

At the same time, the extrusion line for flat yam production from synthetic raw materials, described on the below website is known (see http://www.textileclub.ru/index.php?option=articles&task=viewarticle&artid-324&Itemid=55). The line includes the following processing equipments. These are, first of all, extruder with charging hopper, pressure control pump, and driver. The line also includes a filter for melts, flat-die, bath with cooling water, and receiving rollers, which are installed after the bath. The described line has a device for cutting the tape into separate strips. The line also includes stretching rollers; their number and degree of stretching on each roller depends on specified functional properties of flat yam. The line also includes device for suction and transport of edged strips. The line includes a chamber for stretching in hot air conditions, and receiving and winding machine. A special feature of this line is a singular adiabatic extruder with output pressure regulation. The extrusion system consists of an extruder with a 90 mm, 27D length screw, made with special geometric contour design, continuously operating band mesh filter, and a special pump, allowing adjusting the extrusion process pressure. The extruder provides uniform polymer melting with high degree of melt homogenization. The pump generates the required pressure, supplying flat-die with the melt. Screw rotary speed corresponds to a given pressure before and after adjustment of the pump. Due to the constant pressure of the pump, which is supported by defined screw rotary speed, the pressure of the melt on flat-die also remains constant. With the increase in productivity, this combination of adiabatic extruder with a metering pump provides some technical advantages. Due to such pump, the extruder may continue efficient work with a very high performance up to 500-550 kg/hr at a low backpressure of melt. The pump increases the pressure from 50 bar at inlet to 200 bar at outlet to flat-die. Extruder screw is designed specially for implementing of high-productive process with regard to obtaining of high quality and uniformly homogenized melt, and running with a speed of 280 rpm. Temperature of polymer melt, despite the high performance and high speed of the screw does not exceed 220°C. Usually, when using extruder with different geometry of screw and without pressure boosting with pump, the melt temperature reaches 240-260°C. Due to lower melt temperature polymer maintains the qualities which are necessary to obtain high quality flat yam, in particular, due to minimal destruction of polymer, which allows for small variation in thickness and better stretching ability of cut strips. Apart from processing equipment listed above, applying the below and some additional devices the line could be completed for production of tape yarns of desired range and quality: volumetric and gravimetric dosing units for four or more components, mechanisms for measuring of tape thickness, fibrillation, ionization, and ejector or vacuum suction system. Different fields of applications of tape yarns dictate equally diverse technology of subsequent reprocessing, such as at circular and needle looms, spinning, needle-punched process, and platting. Kinds of further reprocessing and characteristics of yarns determine requirements to its wounding. Typical parameters for this are sizes of the finished packages and cartridge, as well as technological requirements to the ends of bobbin, and besides, to tension and winding speed. Tape yarns for tape processing in circular loom are used most of all. This line has a number of advantages, except the above listed; among them are the following. First of all, high speed potential of up to 450 m/min, low power consumption, and low heat output of electric motors.

But this extrusion line for synthetic flat yam manufacturing also has some disadvantages. The main disadvantages of known extrusion line for synthetic flat yam manufacturing, as the previous analogues, are high cost of flat yam from synthetic raw material, as well as its reduced strength properties.

However, the extrusion line for flat yam manufacturing from synthetic raw materials is known (see British Patent No. 1243512 dated 9 August 1968, IPC 9 D06M 17/00). This extrusion line for flat yam production from synthetic raw material is closest to the claimed one by the technical nature and the result achieved when using it (a prototype). But this closest analogue (prototype) has the same disadvantages as the described above analogues. Disadvantages of closely similar extrusion line for synthetic flat yam manufacturing from synthetic raw material are as follows. Since synthetic raw materials, such as e.g. polypropylene or polyethylene, are much more expensive than such materials as calcium carbonate, calcium stearate, or talc, for cheapening yam, additives based on calcium carbonate, calcium stearate, talc, and the like, are generally applied. Lately, organic calcium carbonate was administered as additive in the form of milled cattle bones, and fish bones, in order to utilise them, and thus cheapen the flat synthetic yam. However, particles, such as calcium carbonate (CaCO₃), escaping on the surface of tapes obtained in general processing, which is subsequently cut into flat strips, and from which yarns are then manufactured, form a roughened surface. Particles of calcium carbonate (CaCO₃) escaping on the surface of already finished yam have significant abrasive qualities. This results in additional wear of equipment parts, with which yam subsequently contacts, for example, the working parts of the loom. This determined by the fact that the yam actively contacts with mechanisms of the loom, at least at five locations in the loom where the particles, for example, of sodium carbonate or calcium stearate are collected. Alongside with that, particles of carbonate or calcium stearate can stand out in a significant amount of the surface layer of yam with all the ensuing consequences. Primarily, knocked out from the surface layer calcium carbonate particles form dust, which, falling into the rotating parts of the looms and machinery, additionally increases the wear. The particles of calcium carbonate or stearate fall in bearings putting them out of operation prematurely. Besides, calcium carbonate particles enter into a variety of electrical devices on the loom, causing short-circuits of electrical circuit, up to the stop of the weaving line. In addition, the same dust of calcium carbonate, the so-called "chalk dust", mixing with the air, from the standpoints of occupational safety and health of service personnel, worsens the sanitary and hygiene conditions. To bring working conditions of service personnel to regulated standards, primarily by air cleaning, additional equipment for cleaning is required, including forced exhaust ventilation. This in turn increases the cost of the flat synthetic yam. It should also be noted that white particles of chalk reduce saturation of coloured pigment, which is typically administered for coloration of flat synthetic yam. In this connection it is also necessary to increase the amount of coloured pigment three times greater than for the yarns without calcium carbonate. But coloured pigment is significantly more expensive than calcium carbonate and polymers, which also implies increased costs of flat synthetic yam. Moreover, during the manufacturing process on extruding line for synthetic flat yarns manufacturing, when obtaining tape from extrusion alloy, it is commonly cooled in a water bath. However, since the surface of the tape is rough, it helps to hold larger amounts of water on the tape surface, and removal of this water is technologically difficult. In this connection general technological process requires additional time-consuming operations to remove the water, which increases the cost of technological process, and therefore increases the cost of flat synthetic yam. When tape cooling is carried out on cooling rollers, in this case, because of the abrasive properties of the particles of calcium carbonate, which escape onto the surface of the tape, deterioration of the cooling rolls increases. At the same time, it is necessary to emphasize that the application of calcium carbonate in synthetic raw materials for production of synthetic flat yam, in any case, determines the reduced strength properties of the flat yam with all the ensuing consequences. It can be seen that the main disadvantages of the known extrusion line for synthetic flat yam manufacturing, as the closest analog (prototype), are the high cost of flat synthetic yarns produced in the line and reduced strength properties.

The task set before the developer of new extrusion line for flat yarn manufacturing from synthetic raw materials, was to create such an extrusion line for flat yam manufacturing from synthetic raw materials, which would reduce the cost of production of a flat yam from synthetic raw materials due to the use of cheap or recyclable material which does not sharply decrease strength and other properties required for a particular yam. As a consequence this will allow applying yarns manufactured at new extrusion line for production of different purpose goods. The technical result reached in the process of solving this problem, was the possibility to form layers in flat yam from synthetic raw material, which is obtained with the help of constructed line with desired properties, using cheaper or recyclable materials.

The essence of the invention lies in the fact that an extrusion line for production of flat yarns from synthetic material includes the film forming flat-die and device for its cooling, and apparatuses for cutting the film into strips, stretching, shrinkage, and winding the yarns obtained on cores; comprising at least two extruders, forming melts with a different, predetermined properties; comprising a device for distributing melt at least in three layers of a multilayer film; comprising a cooling device designed as a water bath or a cooling roll; and, after the cooling apparatus in line, a means for removing water from a film installed, made in the form of rollers with an elastic material on the periphery thereof.

At the same time, essence of the invention lies also in the fact that in an extrusion line for production of flat yarns from synthetic material, following device for water removal from the film, slotted tubes for removal of remainders of water are installed.

Moreover, the essence of the invention lies also in the fact that in an extrusion line for production of flat yarns from synthetic material, following extruding machines, a device for distribution of liquid melts by layers is installed.

At the same time, essence of the invention lies also in the fact that flat-die for film process in an extrusion line for production of flat yarns from synthetic material is executed triple-slotted.

Moreover, essence of the invention lies in the fact that in an extrusion line for production of flat yarns from synthetic material flat-die for film process is executed five-slotted.

At the same time, essence of the invention lies also in the fact that in an extrusion line for production of flat yarns from synthetic material, following device for film cutting on stripes, the fibrillator is installed.

Moreover, essence of the invention lies also in the fact that in an extrusion line for production of flat yarns from synthetic material, following device for stretching, a device for thread twisting is installed.

At the same time, essence of the invention lies also in the fact that in an extrusion line for production of flat yarns from synthetic material, following device for twisting, a device for yam oiling is installed.

Proofs of fulfilment possibility of new extrusion line for production of flat yarns from synthetic material, with realization of designated appointment, are listed further as case studies of an extrusion line for production of synthetic flat yarns. These case studies of specific extrusion lines for production of flat yarns from synthetic material according to the present invention don't limit in any way the scope of protection of the invention. In these case studies only illustration of new extrusion line for production of flat yarns from synthetic material is given.

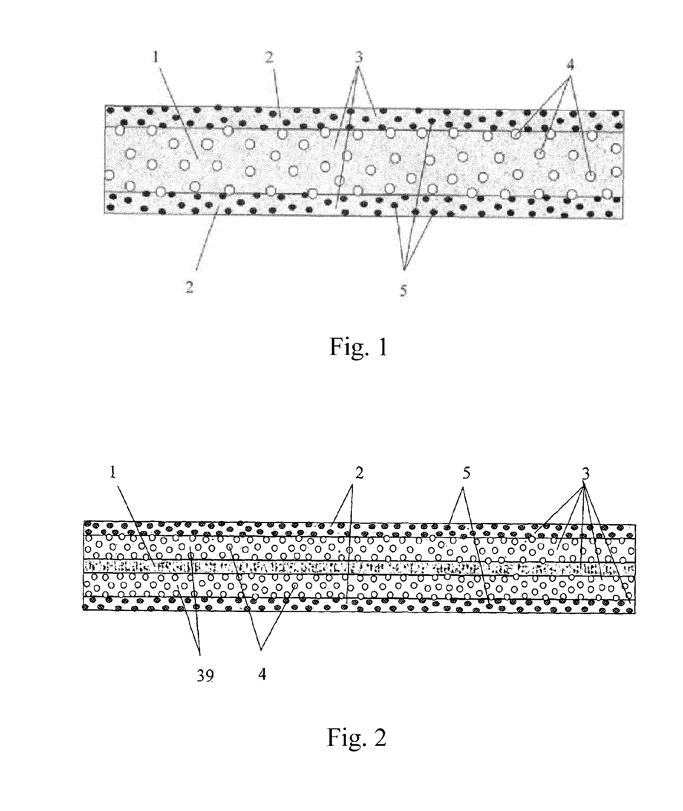

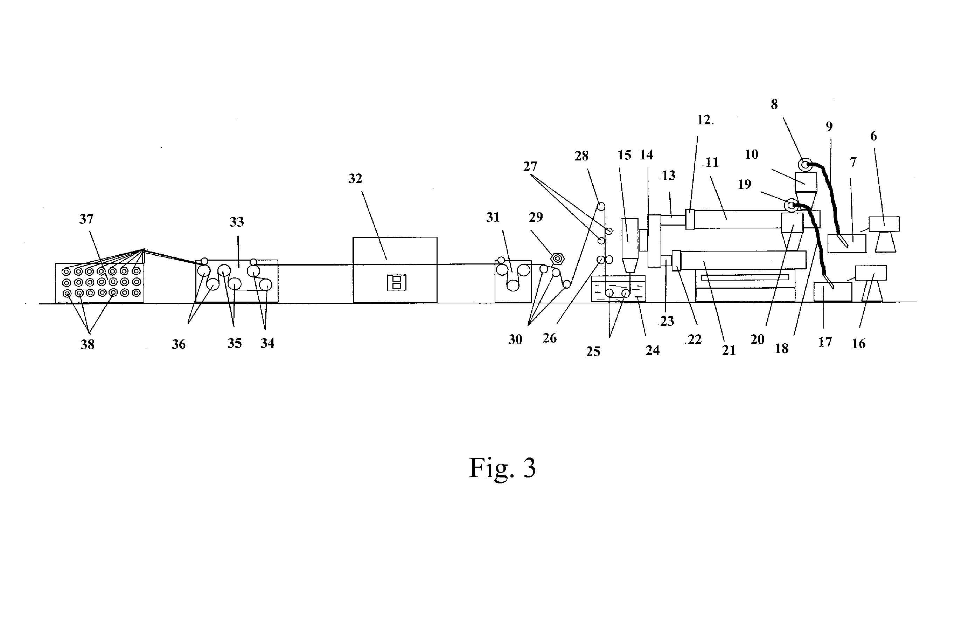

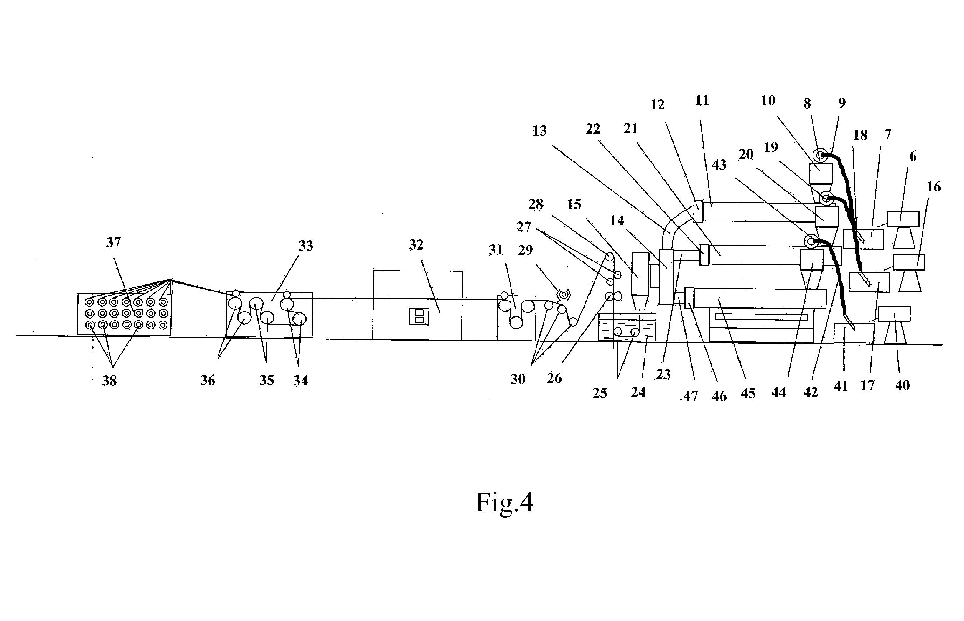

Supplied in capacity of case studies of the invention, production lines for flat yarns from synthetic material are explained in graphic form, where:
The cross-section view of three-layer flat yam from synthetic material, containing calcium carbonate (CaCO₃) in the internal layer and coloured superconcentrate in the external layers, obtained using new line is shown on Figure 1;
The cross-section view of five-layer flat yam from synthetic material, obtained using new line is shown on Figure 2;
The line for production of three-layer flat yam from synthetic material is shown on Figure 3;
The line for production of five-layer flat yam from synthetic material is shown on Figure 4.

The cross-section view of three-layer flat yam from synthetic material is shown on Figure 1, where:
1 - is internal layer
2 - is external layer
3 - is polymeric compound
4 - are particles of calcium carbonate (CaCO₃)
5 - are particles of coloured pigment

An extrusion line for production of three-layer flat yarns from synthetic material represents a chain of serial and parallel equipment units (see Figure 3). At the beginning of the line mixer 6 is installed, representing a cylindrical form vessel with inlying paddles for «dry» blending of components. Rotation of paddles is provided by induction motor via planetary reduction gear (not shown on the drawing). Tray of the mixer 6 for unloading mixed components is situated above metal box 7. Box 7 is meant for the reception of raw ready mixture from mixer 6. Box 7 is connected with vacuum loader 8 through flexible pipeline 9. Under the vacuum loader 8 is situated bunker 10, which is installed onto the feed end of auger-cylinder part of extruder machine 11. Extruder machine 11 represents material cylinder with the auger inside. The auger is connected with induction motor with the possibility to control the inverter through the reduction gear. Over the material cylinder heating elements are situated, operated by thermo controllers, which provide heating of material cylinder, auger and, consequently, raw material fed into extruder machine. At the outlet part of extruder machine the cylinder, filter unit 12 is situated, meant for filtration of melt through close-meshed metal lath situated inside the unit. Filter unit 12 is connected through connector 13 to distribution adapter 14. Distribution adapter 14 represents a device with channels for supply and distribution of liquid melts by layers in three-layer flat-die 15. Similarly and in parallel to described above units, following ones are situated: mixer 16, box 17, pipeline 18, vacuum loader 19, bunker 20, auger-cylinder part 21, filter unit 22, and connector 23. Connector 23, similar to connector 13 is connected with distribution adapter 14. Distribution adapter 14 is connected with three-layer flat-die 15, in which channels are made for distribution and combination of liquid melt layers along the entire length of flat-die. Under the flat-die, cooling bath 24 is installed, representing rectangular metal vessel with two situated inside non-rotatable metal shafts 25, and water supply and circulation system. Cooling bath 24, filled with water, provides liquid melts cooling for the film formation. Above the bath, a unit of water nip rolls 26 is located consisting of two rubber coated rolls intended to remove water from the film surface, and of pneumatic clamping system for the rolls. Unit of water nip rolls 26 is connected to an induction motor, inverter-controlled via reduction gear. Above water nip rolls unit 26, moisture-removing pipes 27 are installed, intended for extraction of residual moisture from the film surface. Moisture-removing pipes 27 are slotted to capture moisture, and are connected through flexible hoses with an aspirating fan. Above moisture-removing pipes 27, by-pass roller 33 is located, which serves to guide the film to cutting unit 34. Cutting unit 34 is located above by-pass rollers 30, and represents metal shaft with thread and nut, onto which metal or plastic rings are put. Cutting elements are arranged between the rings. Rings on the shaft are tightened with nut. The shaft of device for device for cutting 29 is positioned transversely to the film, wherein cutting elements of device for device for cutting 29 are installed in order to cut the film into strips. Following by-pass rollers 30 receiving shaft unit 31 is installed, which represents a base frame with attached metal shafts. These shafts are connected with an induction motor, inverter-controlled via reduction gear. Stretching furnace 32 is a non-hermetic metal box with an opening lid, inside of which are heating elements operated by a temperature controllers, and induction motor with wings on the rotor axis. Between the cover and the box some space is provided for passage of strips. Following the stretching furnace 32, unit of shafts 33 is installed, consisting of groups of stretching shafts 34, and shrinking shafts 35 and 36. Moreover, shafts 35 are equipped with a heating system for shaft surfaces, and shafts 36 are equipped with a cooling system. Following this, winding station 37 is installed that is made as a base frame, on which the properly winders 38 are located. Their number depends on the number of produced filament reels. Basically, winders 38 represent a plate with rollers for passage of the thread, axis for fixing the core, and changing device installed on it. Each of the winders 38 is connected with induction motor.

The new extrusion line for production of three-layer flat yarns from synthetic material works in the following manner. Polypropylene and granulated coloring "super-concentrate" substance are filled by measuring cup into the mixer 6, wherein "dry" blending is performed. The mixing time is set by the timer. The obtained mixture is poured into box 7. Using vacuum loader 8 through pipeline 9, mixture of components is continuously taken from box 7 and supplied to bunker 10. In the bunker 10, equipped with system for drying raw materials and magnetic trap for metal particles, the mixture is adjusted to required humidity, and accidental metal particles are removed. From the bunker 10 mixture of synthetic materials is supplied to the auger-cylinder extruder zone 11 for compaction and heating. Then heated synthetic materials are converted into liquid melt for forming outer layers of three-layer film. The resulting melt is fed under pressure from auger-cylinder extruder zone 11 to filter unit 12, where unwanted inclusions are filtered from melt. The filtered melt from the filter unit 12 via connector 13 is supplied to the channel, corresponding to outer layers, of the distribution adapter 14. From the channel of outer layers of distribution adapter 14, melt flows into the outer layers formation channels of a three-layer flat-die 15. Similarly, polypropylene and additive based on calcium carbonate (CaCO₃) in the form of granules are poured by measuring cup into mixer 16, where they "dry" blending is performed. Prepared mixture is poured into box 17. Using vacuum loader 19 through pipeline 18, the mixture of components is continuously taken from box 17 and supplied to the bunker 20. In bunker 20, equipped with system for drying raw materials and magnetic trap for metal particles, the mixture is adjusted to required humidity, and accidental metal particles are removed. From bunker 20 mixture of synthetic materials is fed into the auger-cylinder extruder zone 21 for compaction and heating. Then heated synthetic materials are converted into liquid melt for forming the internal layer of the three-layer film. The resulting melt is fed under pressure from auger-cylinder zone 21 to filter unit 22, wherein the melt is filtered off unwanted inclusions. The filtered melt from filter unit 22 through the connector 23 enters the channel corresponding to the internal layer of the distributing adapter 14. From the inner layer channel of distributing adapter 14 melt enters the channel for forming the internal layer of the three-layer flat-die 15. From bushing part of three-layer flat-die 15 all three melt layers come out simultaneously without mixing, but interconnected. Melts will be distributed as follows: the external layer - the internal layer - the external layer. Thus obtained melt is fed to cooling bath 24 filled with water, where it is cooled. The cooled melt forms a three-layer film, which is held closer to bottom of the bath 24 by non-rotatable shafts 25 to extend the path and therefore, high-quality cooling of the film. Then the resulting film is carried through the unit of water nip rolls 21 with a rubber coating, which remove water from the surface of the film. Residual moisture is removed from surface of the film on moisture-removing pipes 27. Through by-pass roller 28, and then by-pass rollers 30, film is served on the group of receiving shafts 31. As the film is stretched between rolls 26 and 31, the blades of device for cutting 29 can easily cut the film into strips of specified width, and therefore the receiving shafts 31 receive three-layer flat strips. Then flat strips are subjected to a multiple stretching. The strips are directed from the receiving shafts 31 through the stretching furnace 32 to group of stretching shafts 34 of shaft unit 33. Rotation velocity of stretching shafts group 34 is several times higher than speed of receiving shafts 31; so in hot air environment of the stretching furnace 32, the stretching of strips is performed with increasing of length and decreasing of thickness, depending on the stretching multiplicity. Air inside the furnace is heated by means of heating elements and fed into the space of passing strips. While rotating, the blades force air circulation from the heating zone to the space of passing strips, and back. Thus, strips are converted into fibers, in which molecular chains are oriented in the longitudinal direction that gives them additional strength. Obtained in the stretching process, threads have internal strain of molecular structure, which is removed during the shrinking process. Therefore, threads from group of stretching shafts 34 are fed to group of hot rolls 35, and further to cold roll group 36. Rotation velocity of hot rolls 35 is equal to rotation velocity of stretching shafts group 34, and the rotation velocity of the cold rolls 36 is 5% less than the rotation velocity of hot rolls 35. At contact with the surface of hot roll group, thread is heated, wherein differential velocity between rolls 35 and 36 facilitates the process of relieving molecular structure strain in the thread. Thus, yam shrinking process is performed and yam decreases in length by 5%. By contact with the cold surface of rolls group 36 the thread is cooled, thereby completely stabilizing molecular structure of the thread. Finished yarns are fed to winding station 37, where through the instrumentality of winders 38 they are carried to filament winding cores. Thus, three-layer flat yarns wound on cores are obtained.

The cross-section view five-layer flat yam from synthetic material is shown on Figure 2, where:
1 - is internal layer
2 - are external layers
3 - is polymeric compound
4 - are particles of calcium carbonate (CaCO₃)
5 - are particles of coloured pigment
39 - are middle layers.

The extrusion line for obtaining five-layer flat fiber from synthetic raw material represents a row of serial and parallel equipment units (see Figure 4). At the beginning of the line mixer 6 is installed, representing a cylindrical form vessel with inlying paddles for "dry" blending of components. Rotation of paddles is provided by an asynchronous motor via a planetary reduction gear. The mixing time is set with a timer. Tray of the mixer 6 for unloading mixed components is situated above metal box 7. Box 7 is designed for receiving of raw ready mixture from mixer 6. Box 7 is connected with vacuum loader 8 through flexible pipeline 9. Under vacuum loader 8 is situated bunker 10, which is installed onto the feed end of auger-cylinder part of extruder machine 11. Extruder machine 11 represents material cylinder with the auger inside. The auger is connected with induction motor with a possibility to control the inverter through reduction gear. Over the material cylinder heating elements are situated, operated by thermo controllers, which provide heating of material cylinder, auger and, consequently, raw material, fed into the extruder machine. At the outlet part of extruder machine the cylinder filter unit 12 is situated, meant for filtration of melt through the close-meshed metal lath situated inside the unit. Filter unit 12 is connected through connector 13 to distribution adapter 14. Distribution adapter 14 represents a device with channels for supply and distribution of liquid melts by layers in five-layer die 15. Similarly and parallel to described above units, following ones are situated : mixer 16, box 17, pipeline 18, vacuum loader 19, bunker 20, auger-cylinder part 21, filter unit 22, and connector 23. Connector 23, similar to connector 13, is connected with distribution adapter 14. In a similar way and parallel to described above units, also the following units are placed: mixer 40, box 41, pipeline 42, vacuum loader 43, bunker 44, auger-cylinder part 45, filter unit 46, and connector 47. Connector 47, similar to reducer connector 13, is connected with distribution adapter 14. Distribution adapter 14 is connected with five-layer flat-die 15, in which channels are made for distribution and combination of five melt layers along the entire length of the die. Under the flat-die, cooling bath 24 is installed, representing rectangular metal vessel with two situated inside non-rotatable metal shafts 25, and water supply and circulation system. Cooling bath 24, filled with water, provides liquid melts cooling for the film formation. Above the bath, a unit of water nip rolls 26 is located consisting of two rubber coated rolls, intended to remove water from the film surface, and of pneumatic clamping system for the rolls. Unit of water nip rolls 26 is connected to an induction motor, inverter-controlled via reduction gear. Above water nip unit 26, moisture-removing pipes 27 are located, intended for extraction of residual moisture from the film surface. Moisture-removing pipes 27 are slotted to capture moisture, and are connected through flexible hoses with an aspirating fan. Above moisture-removing pipes 27, by-pass roller 28 is located, which serves to guide the film to device for cutting 29. Device for cutting 29 is located above by-pass rollers 30, and represents a metal shaft with thread and nut, onto which metal or plastic rings are put. Cutting elements are arranged between the rings. Rings on the shaft are tightened with nut. The shaft of cutting unit is positioned transversely to the film, wherein cutting elements of device for cutting 29 are installed in order to cut the film into strips. Following by-pass rollers 30 receiving shaft unit 31 is installed, which represents a base frame with attached metal shafts. These shafts are connected with an induction motor, inverter-controlled via reduction gear. Stretching furnace 32 is a non-hermetic metal box with an opening lid, inside of which are heating elements operated by temperature controllers, and induction motor with wings on the rotor axis. Between the cover and the box some space is provided for passage of strips. Following the stretching furnace 32 unit of shafts 33 is installed, consisting of groups of stretching shafts 34, and shrinking shafts 35 and 36. Moreover, shafts 35 are with a system of heating for shaft surfaces, and shafts 36 are equipped with a cooling system. Following this, winding station 37 is installed that is made as a base frame, on which the properly winders 38 are located. Their number depends on the number of produced filament reels. Basically, winders 38 a plate with rollers for passage of the thread, an axis for fixing the core, and a changing device installed on it. Each of winders 38 is connected with induction motor.

The new extrusion line for production of five-layer flat yarns from synthetic raw material works in the following manner. Polypropylene and granulated coloring "super-concentrate" substance are filled by measuring cup tank into the mixer 6, wherein "dry" blending is performed. Prepared mixture is poured into box 7. Using vacuum loader 8 through pipeline 9, the mixture of components is continuously taken from box 7 and fed to bunker 10. In the bunker 10, equipped with system for drying raw materials and magnetic trap for metal particles, the mixture is adjusted to required humidity, and accidental metal particles are removed. From the bunker 10 mixture of synthetic raw materials is supplied to the auger-cylinder extruder zone 21 for compaction and heating. Then synthetic raw materials are converted into liquid melt for forming outer layers of the five-layer film. The resulting melt is fed under pressure from auger-cylinder extruder zone 11 to filter unit 12, where unwarranted inclusions are filtered from melt. The filtered melt from the filter unit 12 via connector 13 is supplied to the channel, corresponding to outer layers, of distribution adapter 14. From the channels of outer layers of distribution adapter 14 melt flows into the outer layers formation channels five-layer flat-die 15. Similarly, polypropylene and additive based on calcium carbonate (CaCO₃) in the form of granules are poured by measuring cup into mixer 16, where the "dry" blending is performed. Mixture is poured into box 17. Using vacuum loader 19 through pipeline 18, the mixture of components is continuously taken from box 17 and supplied to bunker 20. In bunker 20, equipped with system for drying raw materials and magnetic trap for metal particles, the mixture is adjusted to required humidity, and accidental metal particles are removed. From bunker 20 mixture of synthetic raw materials is fed into screw the auger-cylinder extruder zone 21 for compaction and heating. Then heated synthetic raw materials are converted into liquid melt for forming middle layers of five-layer film. The resulting melt is fed under pressure from auger-cylinder zone 21 to filter unit 22, where the melt is filtered off unwanted inclusions. The filtered melt from filter unit 22 through connector 23 enters the channel of distribution adapter 14, corresponding to middle layers. From channel of middle layers of distribution adapter 14, melt enters the channel for forming middle layers of five-layer flat-die 15. Similarly, polypropylene of one or several grades granulated form is poured by measuring cup into mixer 40, where the "dry" blending is performed. Prepared mixture is poured into box 41. Using vacuum loader 43 through pipeline 42, the mixture of components is continuously taken from box 41 and fed to bunker 44. In bunker 44, equipped with system for drying raw materials and magnetic trap for metal particles, the mixture is adjusted to required humidity, and accidental metal particles are removed. From bunker 44 the mixture of synthetic raw materials is fed to auger-cylinder zone 45 of extrusion machine for compaction and heating. Then heated synthetic raw materials are converted into liquid melt for forming reinforced layer of five-layer film. The resulting melt is fed under pressure from auger-cylinder zone 45 to filter unit 46, where the melt is filtered off unwanted inclusions. The filtered melt from filter unit 46 through connector 47 enters the channel of distribution adapter 14, corresponding to reinforced layer. From the channel of reinforced layer of distribution adapter 14, the melt enters the channel for forming reinforced layer of five-layer flat-die 15. From bushing part of five-layer flat-die 15 all five melt layers come simultaneously without mixing, but interconnected. The melts are distributed as follows: exterior layer - middle layer - reinforced layer - middle layer - exterior layer. Thus obtained melt is fed for cooling to bath 24 filled with water. The cooled melt in the form of film is held closer to the bottom of bath 24 by non-rotatable shafts 25 to extend the path and therefore, high-quality cooling of the film. Then the film is carried through the unit of water nip rolls 26 with rubber coating, which removes water from surface of the film. Residual moisture is removed from surface of the film on moisture-removing pipes 27. Through by-pass roller 28, and then by-pass rollers 30, the film is served on the group of receiving shafts 31. As the film is stretched between rolls 26 and 31, blades of device for cutting 29 can easily cut the film into strips of specified width, and therefore receiving shafts 31 receive five-layer flat strips . Then, the flat strips are subjected to multiple stretching. The strips are from receiving shafts 31 through stretching furnace 32 to group of stretching shafts 34 of shaft unit 33. Air inside furnace 32 is heated by means of heating elements and fed into the space of passing strips. While rotating, the blades force air circulation from the heating zone to the space of passing strips, and back. Rotation velocity of stretching shafts group 34 is several times higher than speed of receiving shafts 31; so in hot air environment of stretching furnace 32, the stretching of strips is performed with increasing of length and decreasing of thickness, depending on the stretching multiplicity. Thus, strips are converted into fibers, in which molecular chains are oriented in the longitudinal direction that gives them additional strength. Obtained in the stretching process, the threads have internal strain of molecular structure, which is removed during the shrinking process. Therefore, threads from group of stretching shafts 34 are fed to group of hot rolls 35, and further to cold roll group 36. Rotation velocity of hot roll group 35 is equal to rotation velocity of stretching shafts group 34, and the rotation velocity of cold roll group 36 is 5 % less than the rotation velocity of hot rolls 35. At contact with the surface of hot roll group, thread is heated, wherein differential velocity between rolls 35 and 36 facilitates the process of relieving molecular structure strain in the thread. Thus, yam shrinking process is performed and yam decreases in length by 5 %. By contact with the cold surface of group 36 the thread is cooled, thereby completely stabilizing molecular structure of the thread. Finished yarns are fed to winding station 37, where through the instrumentality of winders 38 they are carried to filament winding cores. Thus, five-layer flat yarns wound on cores are obtained.

The application of the new extrusion line to give flat thread of synthetic raw material in industry and in other branches will permit to reduce sharply the cost of flat synthetic fibers, produced with this method, without reducing their strength qualities. Advantages of the production and application of flat multilayer filaments obtained in novel extrusion line are as follows. The particles of calcium carbonate (CaCO₃), or other additives such as talc, are absent on the glossy surface of the film that prevents the retention of water, for an additive, for example, calcium carbonate (CaCO₃) in this case is introduced into the inner layer protected by the outer layers. The fiber obtained in novel extrusion line has no significant abrasive properties as obtained by the known lines, which lead to additional wear of equipment parts, which subsequently adjoins the fiber, for example, working parts of a weaving loom. On application of novel extrusion lines for the production of synthetic flat fibers the reliability of the weaving line is also increased by elimination of electrical equipment failure. The absence of so-called chalk dust will improve the sanitary conditions of workers, and generally reduce the wear on equipment as well. The uptake of more various additives, such as calcium carbonate (CaCO₃) is possible for saving more expensive polymers. The less use of expensive coloured super concentrate is possible by means of putting it only in the exterior layers. At that, each of the exterior layers may be substantially thinner than the inner layer. It should also be noted that using the novel extrusion line for the production of flat fiber, various threads can be produced depending on the required properties, and making them multi-layered, with each layer possessing unique properties. This makes the novel line for manufacturing flat synthetic fibers even more actual, as defined properties of obtained fibers will be determined in as required, because e.g. extremely high strength of the fiber is not always practically wanted.

## Claims

1. Extrusion line for producing flat fiber of synthetic raw material, comprising of flat-die for formation of the film and device for its cooling, and device for cutting the film into strips as well, their stretching, shrinking and winding of obtained fibers on the cores, comprising of at least two extruder machines, forming melts with different predetermined properties, differed in that it comprises device for distributing melts at least in three layers of the multilayer film, and a cooling device is made in the form of a water bath or a cooling shafts, and after the cooling device a remover of water from the film is installed, made as shafts with elastic material on the rim, after which pipes with slots for removing of residual moisture are installed.

2. Extrusion line for producing flat fiber of synthetic raw material according to Claim 1, differed in that the device for melt distribution to the layers is installed in the line following the extruder machine.

3. Extrusion line for producing flat fiber of synthetic raw material according to Claim 1, differed in that the extrusion die for forming a film is made as triple-slotted.

4. Extrusion line for producing flat fiber of synthetic raw material according to Claim 1, differed in that the extrusion die for forming a film is made as five-slotted.

5. Extrusion line for producing flat fiber of synthetic raw material according to Claim 1, differed in that the fibrillator is installed in the line following the device for cutting a film to strips.

6. Extrusion line for producing flat fiber of synthetic raw material according to Claim 1, differed in that the device for thread twisting of the fiber is installed in the line following the device for stretching.

7. Extrusion line for producing flat fiber of synthetic raw material according to Claim 1, differed in that the device for yam oiling of the fiber is installed in the line following the device for thread twisting.
